# EUROPEAN PATENT SPECIFICATION

(11) **EP 1 060 632 B1**
(45) Date of publication and mention of the grant of the patent: **04.01.2006**
(21) Application number: 99911693.2
(22) Date of filing: 22.02.1999
(51) Int. Cl.: H04Q 7/38

(54) **METHOD, ARRANGEMENT AND APPARATUS FOR PROVIDING INFORMATION**
VERFAHREN, VORRICHTUNG UND APPARAT UM INFORMATION BEREIT ZUSTELLEN
PROCEDE, CONFIGURATION ET APPAREIL DESTINES A LA FOURNITURE D'INFORMATIONS

(30) Priority: 03.03.1998 FI 980479
(43) Date of publication of application: 20.12.2000
(73) Proprietor: TELEFONAKTIEBOLAGET LM ERICSSON (publ), 164 83 Stockholm (SE)
(72) Inventor: JOKELA, Petri, Aulis, FIN-02600 Espoo (FI); AARNIO, Ari, Antero, FIN-02110 Espoo (FI)
(74) Representative: Kärkkäinen, Veli-Matti
(86) International application number: PCT/EP1999/001126
(87) International publication number: WO 1999/045732

(56) References cited:
- EP-A- 0 647 076
- EP-A- 0 794 642
- WO-A-97/07467
- WO-A-98/59506

## Description

### FIELD OF THE INVENTION

The present invention relates to a method for providing, i.e. obtaining and transmitting, information to a mobile user. The invention relates further to an arrangement and an apparatus which can be used when providing information to a mobile user.

### BACKGROUND OF THE INVENTION

Ever increasing amounts of various kinds of information is provided, e.g. by a communications network known as Internet. The Internet may be defined as a global open communications network connecting a great number of local area networks, such as networks of various companies, public administration, universities and other organizations and e.g. MANs (Metropolitan Area Network) through e.g. PSTNs (Public Switched Telephone Network) and/or ISDNs (Integrated Services Digital Network) and suitable gateways.

The two most often used communication protocols for the Internet are TCP and IP protocols (Transport Control Protocol resp. Internet Protocol). In most cases various services accessible through the Internet are provided utilizing so called HTTP protocol (Hypertext Transfer Protocol) of a World Wide Web (WWW), which provides a graphical Internet interface for a data processing device, such as a microcomputer or a PC (Personal Computer) or a workstation. The WWW contains HTML documents (HyperText Markup Language), i.e. "hyperdocuments", one such document forming one entity which can contain text, pictures, even moving pictures and video, and sound and links to other documents. A hyperdocument usually has so called "web master" who updates the information contained in the HTML document, i.e. the document data.

The HTML documents include a great and ever increasing amount of information of various kinds. A part of this information can be called area related, i.e. it is e.g. information about cities, counties, countries or other geographically limited areas. This information can be e.g. street maps, lists or addresses or maps for tourist attractions or governmental services, presentations and adds by various shops or services and so on. In addition, a wide variety of timetables, route information and etc. information for trains, busses and air traffic can be obtained from area related HTML pages, as well as information concerning companies and business of that area, libraries, schools etc. In other words, the area related information may be any kind of information which can be introduced to the public through an appropriate communications network, such as the Word Wide Web (WWW).

Conventionally the WWW pages or documents are located using a "http://www.xxxx.xx" type address, i.e. a URL (Universal Resource Locator), where the www.xxxx.xx is the address location from which the document can be found and retrieved to the user interface connected to the Internet. Finding a particular page requires a precise knowledge of the actual Internet http address. However, unknown WWW pages can also be located by using a known link collection (or a "list") of the WWW pages, such as 'Lycos', or by using some of the search engines available in the WWW, such as 'Alta Vista', which have been created to assist the WWW users for locating various documents.

In addition to a conventional Public Switched telephone Network (PSTN) having fixed connections, it is also possible to access the Internet and thus also the WWW pages by means of a mobile station of a mobile user communicating through an air interface with a Public Land Mobile Network (PLMN). The suitable apparatus for this comprise e.g. various portable computers connected to a mobile telephone or radio transceiver interface. The major manufacturers of mobile telephones do provide interface means for enabling the connection between the computer and the desired communications networks, such as to the Internet, by means of the mobile telephone and via the mobile telephone network. The mobile station and the mobile network used for this can also be based on either the analog or the digital mobile telephony technology. In addition, an integrated data processing and mobile transceiver apparatus is also known. In this the mobile station is an integrated portable unit comprising a data processing device including a CPU (Central Processing Unit), necessary memory means, a display, a keypad and transceiver means for mobile communications.

According to one solution for providing a connection for a PLMN user to the Internet, an Internet Access Server (IAS) is connected to the Mobile Switching Center (MSC) of the mobile telephony system. The IAS is arranged to identify the number to which the calling mobile telephone tries to establish a connection. If the destination number is an Internet Service Provider (ISP) number, the call will not be routed to the Public Switched Telephone Network (PSTN) as an ordinary circuit switched call, but it is terminated to the IAS and the data will then be routed via a data network to the ISP, usually in a form of data packets as a packet switched call.

EP 0 647 076 relates to a cellular radio communication system employed within a network of geographical cells traversed by mobile stations, wherein the system is adapted for supplying a mobile station with at least one personalized service on the basis of information on the geographical location of the mobile phone.

WO 97/07467 relates to computer system for identifying local resources, wherein a client computer requests information relating to a place of interest from an information server. The information may contain details of hotels, restaurants, shops, etc. associated with the geographical coordinates of each location.

EP 0 794 642 relates to a terminal device for using telecommunication services, wherein the terminal device has means for connecting to telecommunication network for utilizing data based services and means for offering information processing services.

In the present systems the mobile user has to start to look for the desired information from the Internet via a circuit switched line. The user calls to the ISP and subsequently starts browsing in the Internet so as to find the desired information. In case the URL address is not precisely known, the only way the find out the desired information is to start e.g. from some link collection or to use a search engine of the Internet. However, the user needs to know the addresses of these also in advance to be able to access these when beginning a search for the desired information.

### SUMMARY OF THE INVENTION

Easy access to information which relates to local and area related matters would be useful for anyone who needs to know about the local matters and interest of such area he/she is presently in. This would be especially useful for those mobile users who are visiting a foreign country, or a city or other area they are not familiar with. However, as explained, the user does not necessarily have such a Universal Resource Locator (URL) from which he/she could find the local or area related information. The user might even not know a proper URL address for a search engine or suitable link collection of the desired addresses. A problem lies thus on the fact that the known prior art solutions do not provide an easy and/or even automated access to the desired local information.

In addition, the user may not be willing to retrieve the information, ie. to establish a call so as to receive the desired information, every single time he/she needs it, and especially not every single time the mobile user changes the location or area he/she is at present. The mobile user does not even necessarily known the name or similar indication of the area he/she is currently in. The mobile user might not be aware of the fact that it is possible to retrieve better and more accurate information concerning the area he/she has roamed in compared to that information last received when being in a neighboring area or even in an area which is essentially remote from the current location area. Therefore a need exists for a solution by means of which the area related information could be easily obtained and/or updated as the mobile user roams from one location to another.

To overcome the above disadvantages, it is an object of the present invention to provide a new type of solution for obtaining information which relates to local matters.

An object of the present invention is also to provide a method and arrangement by means of which mobile users of portable computers are provided with local information which is updated in accordance with the movements of the mobile user in an easy and transparent manner.

An object of the present invention is also to provide a method, an arrangement and an apparatus by which the area related information contained in a communications network, such as in the Internet, becomes easily available for the mobile users.

A further object of the present invention is also to provide a solution in which different mobile users are provided with a possibility to have transparently different kind of information in accordance with a predefined subscriber profile.

Other objects and advantages of the present invention will be brought out in the following part of the specification taken in conjunction with the accompanying drawings.

The above objects are obtained by a new method for providing a mobile user with information retrievable from a database. Said method comprises the steps for establishing a communications connection between a mobile station of the mobile user and a base station or base stations of a mobile communications network. The location of the mobile station is then determined on the basis of the base station or base stations of the mobile communications network, and this identified location information is processed in the mobile communications network so as to retrieve area related information relating to the determined location of the mobile station from the database by means of the mobile network apparatus. Said retrieved area related information is then transmitted to the mobile station.

The transmitting of the information to the mobile station is preferably accomplished in accordance with predefined priority rules set for the communications between the mobile station and the mobile network apparatus.

According to the invention such an arrangement in a Public Land Mobile Network (PLMN) comprising a Mobile Switching Center and base stations connected to the Mobile Switching Center for communication through an air interface with a mobile station of a mobile user is provided which enables the mobile user to access information provided through a communications network, said arrangement comprising means for providing an access from the Mobile Switching Center to the communications network and also means for determining the location of the mobile station on basis of location reports received from the base stations. The arrangement comprises further means for processing the location information so as to retrieve location area related information from a database containing said area related information and means for automatically transmitting said retrieved location area related information to the mobile station of the mobile user without any additional request from the mobile station.

According to the invention, a mobile station comprises a mobile radio transceiver for communication via an air interface with at least one base station of a mobile communications network, a portable data processing device operationally connected to the mobile radio transceiver for data processing and for browsing information received through the mobile communications network, the arrangement being such that the data processing device is arranged to receive information from the mobile communications network. Said information is arranged to be selected by means of the mobile network on the basis of the location of the mobile station determined by the mobile communications network before it is transmitted to the mobile station. The mobile station is arranged to receive the selected information transmitted to the mobile station without any separate request by the mobile station.

The solution provides a new manner for receiving area related information, said manner providing several advantages when compared to the prior art. The solution enables an operation in which the area related information is automatically transmitted, ie. "pushed", to the mobile station and the data processing means thereof without any request by the mobile user. The mobile user needs thus not to poll the information, but will easily and in a transparent manner get the desired information about the visited location. In addition, the mobile user will also receive continuously new information as he/she roams from one location to another, without needing to check out the correctness of the information: the network apparatus takes care of this. The mobile user does not need to spend any time searching for the information, eg. from the Internet, or to remember any addresses, but all information is automatically sent to his/her portable data processing device whenever the mobile user logs in or the respective location information changes while roaming, or when the information is updated or modified. In addition, the mobile subscribers can be provided with personal user profiles so that they receive automatically only such information they are interested in.

In the following the present invention and the other objects and advantages thereof will be described by way of examples with reference to the annexed drawings, in which similar reference characters throughout the various Figures refer to similar features. It should be understood that the following description is not meant to restrict the invention to the specific forms presented in this connection but rather the present invention is meant to cover all modifications, similarities and alternatives which are included in the scope of the present invention.

### BRIEF DESCRIPTION OF THE DRAWINGS

Figure 1 is a schematic presentation of a possible network arrangement in which the invention can be implemented in various manners;
Figure 2 discloses a mapping table according to one embodiment of the present invention;
Figure 3 illustrates schematically the possibilities for cell combinations according to the principles of the present invention;
Figure 4 discloses a flow chart of the basic operation in accordance with the present invention; and
Figure 5 discloses a flow chart for a further embodiment.

### DETAILED DESCRIPTION OF THE DRAWINGS

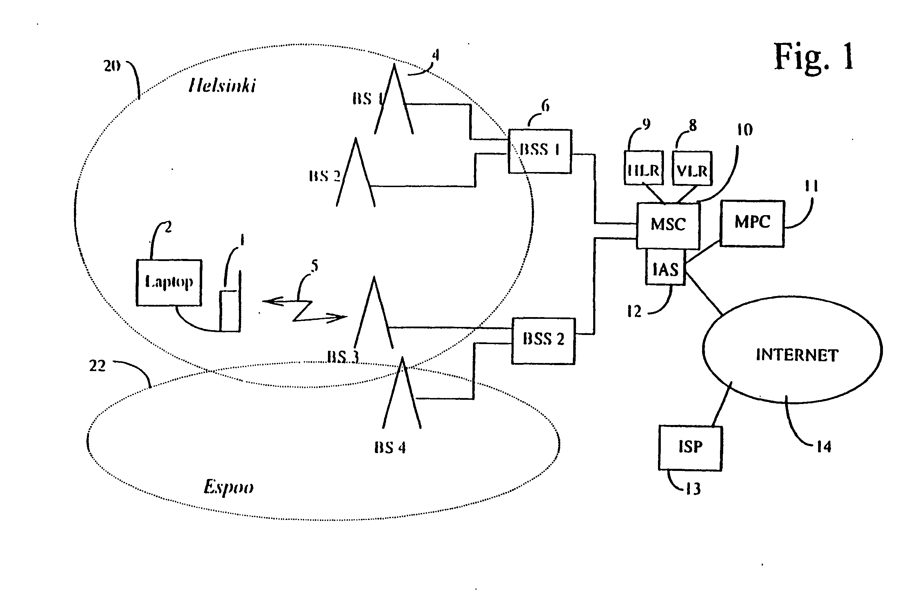

Figure 1 is a schematic presentation of one Public Land Mobile Network (PLMN), ie. of a mobile network system which can be used in the inventive arrangement. The PLMN may be any mobile communications system which is capable of providing location information of a mobile station communicating with it. Figure 1 discloses further an exemplifying mobile station (MS) comprising a mobile radio transceiver 1 and a portable Personal Computer (PC) 2.
The mobile radio transceiver is capable of communicating through an air interface 5 with the PLMN through one of several base stations (BS) 4 of the PLMN, and thus provides mobility for the mobile user. The PC 2 is connected to the mobile transceiver 1 by suitable interface, such as for example *DC23* data card offered by Telefonaktiebolaget L M Ericsson Ab.

One type of the PLMN is a digital GSM network (GSM; Global System for Mobile Communications), which is a cellular network and well specified in the GSM recommendations by ETSI (European Telecommunications Standard Institute).
The network architecture thereof is described in more detail, eg. in the recommendations GSM 01.02 or GSM 03.02 or the revised versions thereof.

It is to be noted that for clarity reasons only those parts of the exemplary mobile network system are shown which are considered as necessary for the purposes of illustrating the operation of the mobile network system. The skilled person is well aware of the fact that the mobile network systems may comprise also other apparatus than those illustrated, and that some of the disclosed elements may be omitted or replaced by some other type of elements, and that a great number of mobile networks and ordinary fixed land line networks may cooperate and interchange with each other. For the purposes of clarity, these possible variations in the PLMN structure are not, however, shown and explained in more detail as they are per se well known to the skilled man.

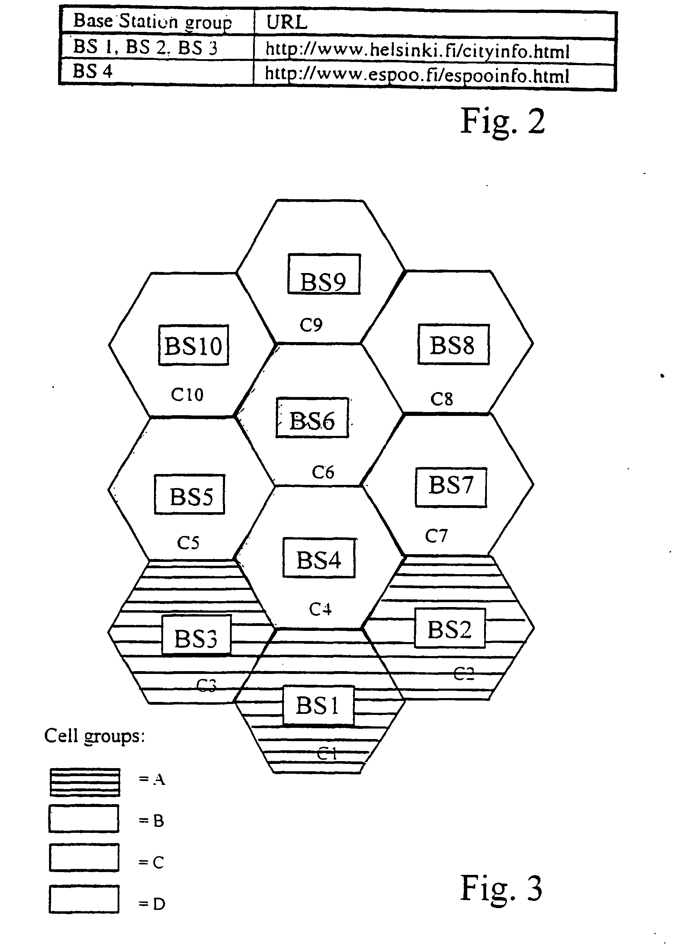

The GSM based PLMN includes usually several mobile services switching centers (MSC) 10, from which only one MSC is shown in Figure 1 for clarity reasons. Each of these is, in turn, connected to a plurality of Base Station Subsystems (BSS) 6 which usually comprise a Base Station Controller (BSC; not shown) and the necessary interface apparatus and required auxiliary apparatus. Each BSS 6 is connected further to a plurality of base stations (BS) 4, each of which supervises a certain geographical area, which may be, eg. be referred to as a cell (for the cells, see Figure 3). It is to be noted that one base station may also supervise several cells, for example when the surroundings of the base station are divided into sectors such that each of the sectors forms a cell.

The PLMN network includes further a database, so called home location register (HLR) 9, which is operationally connected to the MSC 10. Those mobile stations or terminals which are subscribers of the mobile telecommunications network are registered in the HLR 9. Each local mobile telephone switching center 10 includes further a local database called as a visitor location register (VLR) 8, into which all such mobile stations which are visiting the coverage area of any one of the cells handled by that local mobile telephone services switching center MSC at any given moment are registered. In the GSM system the identification of each of the mobile stations is contained in a SIM (Subscriber Identification Module, sometimes referred to as SIM card) which is mounted within each of the mobile stations, or otherwise physically connected thereto.

Figure 1 discloses further that the mobile services switching center MSC 10 is connected or linked to a global communications network, which in the example is the Internet 14. Thus the user of the mobile station, ie. MS 1 and PC 2 may take a connection to the Internet 14 via the PLMN. To be able to use the Internet services, the user has made a contract with one Internet Service Provider (ISP) 13. The ISP 13 is an organization which provides and manages the access to the Internet and thus to various services through the Internet. When the user desires to have an Internet connection, he/she calls to the ISP 13 so as to connect his/her terminal 1,2 to the desired address (so called Internet Protocol address). It is to be understood that even though Figure 1 discloses only one ISP, in practice there are several ISPs connected to the Internet.

According to the example of Figure 1 the connection to Internet from the MSC 10 is accomplished, eg. by means of an Internet Access Server (IAS) 12. The IAS is arranged to convert the circuit switched network signal coming from the mobile station to data packets which can then be sent over a packet switched network and to transmit this packet data to the Internet. However, another types of suitable Access Nodes (AN) than the IAS are also known, and may be used instead for providing the access from the MSC 10 to the Internet 14.

The function of the IAS 12 of Figure 1 is such that as the mobile user calls to the ISP number of the ISP 13 from the mobile station, the IAS 12 is capable of identifying this ISP number. After the IAS 12 recognises chat the number is an ISP number, the actual call through the circuit switched network is terminated in the IAS 12, and the data is converted into data packets and these data packets are then routed via the packet switched network to the ISP 13.

A feature of the PLMN is that the system, and more precisely the MSC thereof, is capable of determining the area the mobile subscriber is currently roaming, ie. the location of the mobile station. This area can be determined by means of the base stations, as the mobile system knows the base station via which the mobile station is communicating, and the cell from which the communication occurred, or at least via which base station or from which cell the mobile station has been communicating recently.

The accuracy of the location can be defined with an accuracy of one base station or a cell. If two or several base stations or cells are grouped for the location purposes (see fig. 3), the accuracy of the location can be determined as an area covered by these grouped base stations or cells. For example, Figure 1 discloses two locations 20 and 22, from which the location 20 is covered by three base stations BS1, BS2 and BS3 and the location 22 by one base station BS4.

Figure 1 discloses also a Mobile Positioning Center (MPC) 11 connected to the MSC 10. The MPC 11 is an alternative which may be arranged to be used for the location determination instead of the MSC 10. A MPC may be required, eg. in instances where more complicated determination operations or data processing and calculations are required, as will be discussed later.

The automated provision of the area related information according co the present invention will now be described in more detail. As the user of the mobile station establishes a call to his/her ISP, the call is routed through the closest BS, ie. BS3 of Figure 1, and then through the BSS2 to the MSC, and therefrom to the IAS 12.

The IAS 12 recognizes that this is an ISP number which should be directed to the ISP 13. After this recognition the IAS 13 will not route the circuit switched call further towards the ISP, but the call is terminated and the information contained by the signal from the mobile station is converted into data packets by the IAS 12. This data is then routed through the packet switched network to the ISP 13:

After the connection from the MS to the IAS 12 has been established, the IAS 12 also checks the profile of the mobile user from the user profile database, which in the example is HLR 9. The user profile informs whether the mobile user has subscribed to an automated information transmitting service or not. The automated information transmitting service can be defined as a service which allows transmitting of information to the portable PC 2 connected to the mobile telephone 1 without any particular request from the PC. In other words, the service may be seen as "pushing" predefined information towards the PC or other data processing device. In case the mobile user has subscribed to the automated information transmitting service, the IAS starts a process for identifying the location of the PC 2, which is the same as the location of the mobile telephone 1 and thus the mobile user thereof.

There are two possible ways to resolve the location of the mobile station: a query in the MSC 10 or alternatively a query in the MPC 11.

If the MSC 10 is used, it will send the location information to the IAS 12. The MSC knows the location of the MS by an accuracy of one BS 4 or a cell, if the MS is in an active mode. If the MS in an idle mode, the location is known by an accuracy of a Location Area. Said Location Area is an area defined by the GSM system in accordance with the GSM specification referred to above. The arrangement is such that when the mobile station MS is in the idle mode, ie. is on but not active (not transmitting to or receiving from any of the base stations), the location information in the MSC is updated only when the Location Area is changed. When the mobile station is active, ie. there is an ongoing call, the location information is updated every time the mobile station is handed over to another base station or from one cell to another.

According to the alternative the MPC 11 is used for finding the location. The MPC 11 may know the location of the mobile station by an accuracy of one base station or a cell, if the mobile station is in a dedicated mode, or by an accuracy of the Location Area, when the mobile station is in an idle mode.

The term location may be defined in general to mean a geographical area covered by a base station or a cell or several base stations or cells, or as a part of the coverage area of one base station or cell. Even though the accuracy of one base station or cell is expected to be accurate enough for some of the services provided through the WWW, there are also services which may require more accurate positioning than location information based on the coverage area of one base station or cell. Therefore it may be required that the MPC 11 is arranged to determine the location in a more precise accuracy than on the basis of one base station or cell. The ways to accomplish this are defined later in more detail.

As can be seen from Figure 3, there are various alternatives for grouping of the base stations and the cells so as to provide desired locations A-D in accordance with the information which is to be sent to the mobile computer. In addition, the locations of a particular user may be defined to be even more inaccurate, eg. groups A+B. In the example of Figure 1 the information to be obtained is information relating to the respective cities and the base stations are grouped approximately in accordance with the city borders (city of Helsinki and city of Espoo).

Figure 2 discloses a table which shows one possibility for the mapping of the information for the arrangement of Figure 1. The mapping table is stored in the IAS 12, and it defines the URL address from which information relating to the current location or base station group can be found and retrieved. It is to be noted that different services (eg. shops, timetables, local news etc.) may have different kind of mapping tables.

As explained, the information contained in the table may be an URL (Universal Resource Locator) which gives the address to a database from which the information is firstly retrieved by the IAS 12. After the IAS 12 receives the information, it is subsequently forwarded to the mobile station and thus to the data processing device or computer. Alternatively the information to be sent to the computer 2 may be already retrieved to the IAS 12 and stored within the memory of the IAS, from which it is sent to the mobile station in accordance with the principles of the invention. The transmissions and/or communications required for the automated information transmission service are preferably accomplished in accordance with predefined priority rules, eg. such that a call from or to the mobile station has always a higher priority than the data transmissions.

As was shortly explained above, it is to be noted that the location information does not need to be entirely based on the base station or cell information, but the MPC 11 can provide a more accurate information about the location of the MS (eg. a distance from the base station) which can be found to be especially useful, eg. in dense city areas. This sets some additional requirements for the MPC 11, since it has to update the location information more often to the IAS than what is needed in the base station by base station or cell to cell type solutions.

According to one approach to resolve this the MPC 11 defines the distance between the mobile station and the base station by utilizing the measured delays of the signals transmitted between the base station or the base stations and the mobile station when the mobile station is in a dedicated mode (ie. when active). The distance from the base station can also be estimated on the basis of the strength of the signal the base station (or stations) receives from the mobile station, or by estimating the direction of movements of the mobile station by means of the information received from the history of recent handovers from one base station or cell to another of that particular mobile station as it roams from the coverage area of one base station or cell to the coverage area of another base station or cell. In case more intelligent systems are used, the handover history and received signal strength and/or delay information may be combined in the MPC. According to one solution, the history is collected from a longer period, and a profile of daily or weekly routines of the mobile user is created on basis of this. This is then used when determining an estimate of the location of the mobile user in a certain time of the day. The software based solutions capable of accomplishing this kind of determinations are often referred to as "neural networks".

When the mobile user roams (ie. the base station with which the MS communicates is changed), the IAS 12 has to receive the information either from the MSC 10 or the MPC 11 about the new location of the mobile user. The information is actively and automatically transmitted by the MSC or the MPC, when the transmission is triggered by the reception of new location information of the MS and thus the mobile user. According to an alternative, the information may be sent in predefined time intervals. If the new base station with which the MS has started to communicate via the air interface is found to be within the same location group as the previous one, no information is sent to the user. In case the base station belongs to another location group, such as when roaming from the area of BS3 to the area of BS4 in Figure 1, new location information is sent to the mobile station MS.
The case is the same if the MS roams into an operation area of another mobile network and operator. In this context it is to be noted that the various different groups or combinations of the base stations or cells may be defined for the same area, eg. depending on the service subscribed to by the mobile user or on the mobile user profile.

Such means for browsing, such as browsers named *Netscape Navigator™* or *Microsoft Internet Explorer*™, already exist which support the sending of the information to the browser means without any specific request by them. According to the inventive idea this feature is now connected to the Internet Access Server IAS or similar means used for accessing the communications network, which then acts as the sending party towards the mobile subscription. This enables a provision of the locally related information produced by local information providers to mobile users in all such places where the automated information transmitting service is available.

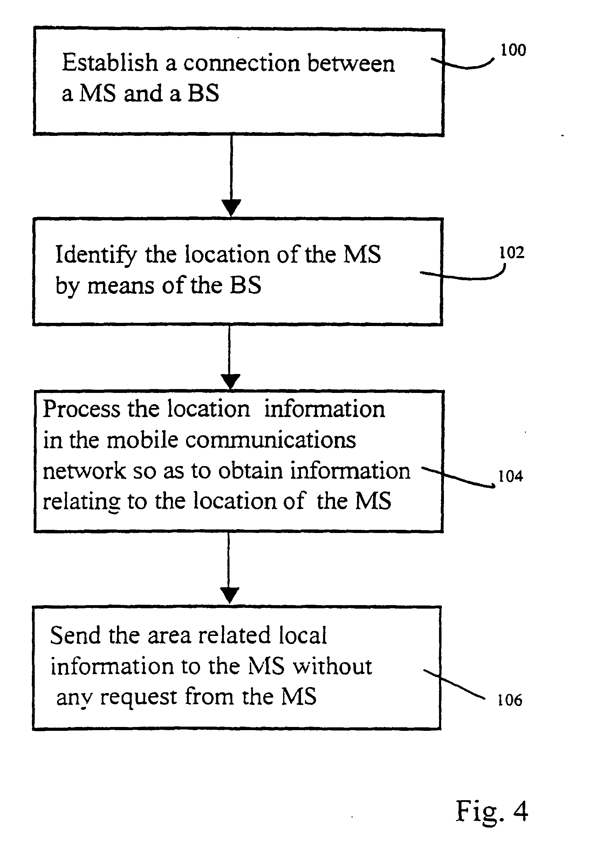

Figure 4 is a flow chart illustrating the operation of the system. According to this the location of the MS is determined at step 102 after the MS has communicated with one BS at step 100. This location information is then processed at step 104, (eg. by means of the MSC or the IAS) so that the IAS is able to locate such information which relates to the current location of the MS. After the area related information has been found, it is retrieved to the IAS and transmitted to the MS at step 106. The information may be, eg. a local map or a bus map and/or time table for local busses, which is then automatically transmitted to the PC of the mobile user.
To give an example of the operation, a map is automatically updated such that as the mobile user moves, the user may always view a map which is defined to be the most appropriate in that particular area the user presently is in, or has moved in, or is about to move in.

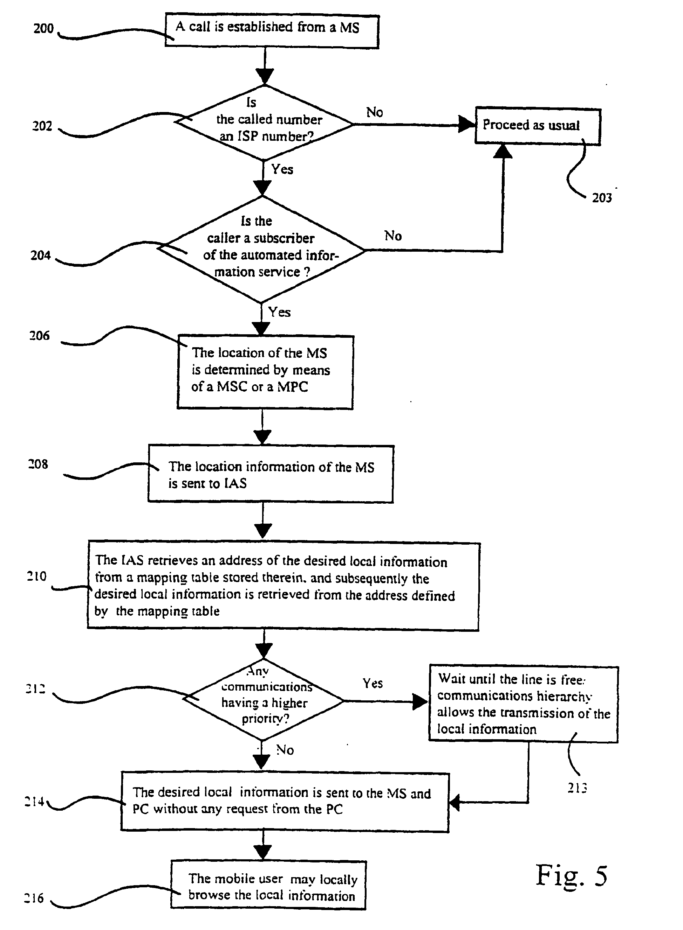

Figure 5 discloses another example of the operation of the invention corresponding essentially to the solution described in connection with Figures 1 and 2, and is thus not explained in detail from those points already explained. From Figure 5 it can be seen that in case the call is not defined at step 202 to be an ISP call, or if the user has not subscribed to the automated information transmitting service (step 204), the call will be proceeded as an ordinary telephone call to the destination number (step 203). If the automated information transmitting service is to be processed, the operation continues by determination of the location of the MS (step 206). The location information is received from the MSC or the MPC at step 208, and thereafter the IAS processes the location information such that desired information is found and retrieved from a WWW server database to the IAS at step 210. After this it is preferably checked at step 212 whether there is any ongoing call or any other such communications between the mobile station and the mobile network which is classified in the user profile or similar as having a higher priority than the transmissions of the local information transmission service. In case of, eg. an ongoing call, the transmission is held at step 213 until the call is terminated. When there is no other traffic and the connection is free, the information is automatically sent to the mobile station at step 214. The mobile user may thus locally browse a document containing the area related local information at step 216 without the need to search and retrieve them from the communications network, such as from the Internet. The documents or WWW pages are automatically and transparently updated without any notice to the user while the user roams into a new location area.

Thus the mobile user is freed from actively searching for the local information he/she wishes to obtain. The mobile user does not have to be the active party, but the arrangement is such that the service implemented in the network side takes care of the selection and transmission of the information. Therefore the information, such as the WWW pages, should always be the latest versions, as they are automatically transmitted or updated by the service whenever they are amended, the mobile user roams into another location or the mobile station is switched on or becomes active. In case the mobile station is switched off, it cannot receive the updates. However, the user cannot use the device either, but he/she has to switch it on to be able to use it. At this stage the information becomes automatically updated by the service. However, in case the mobile station is active, ie. there is an ongoing communications between the mobile station and the network apparatus, the transmission may be postponed until there is a free communications channel available.

As explained, the information may be in the form of HTML documents (HyperText Markup Language) of the WWW. The mobile user may define beforehand, eg. at the time of subscribing the service, which kind of information, ie. documents should be automatically transmitted and/or updated in his/her data processing device and the priority hierarchy of the transmissions. Some of the information may be liable to charges and some of it, such as advertisements, may be transmitted free of charge and to all of the users. There are numerous possibilities to define the "personal information packet" for each of the subscribers, and therefore these possibilities are not explained in more detail herein.

Thus, the invention provides an apparatus and a method by which a significant improvement can be achieved in the area of finding information from communications networks. The arrangement according to the present invention is essentially easy and economical to realize by per se known components and reliable in use. It is to be noted that while the invention is mainly described in the context of an exemplifying cellular telephone network using GSM terminology, those skilled in the art will appreciate that the present invention can be implemented in any suitable mobile system. Thus it should be noted that the foregoing examples of the embodiments of the invention are not intended to restrict the scope of the invention. All additional embodiments, modifications and applications obvious to those skilled in the art are thus included within the scope of the invention.

## Claims

1. A method for providing a mobile user with information retrievable from a database, said method comprising the steps of:
establishing a communications connection between a mobile station (1) of the mobile user and a base station (4) or base stations of a mobile communications network;
determining the location of the mobile station (1) using a base station (4) or base stations of the mobile communications network;
processing the identified location information in the mobile communications network so as to retrieve area related information relating to the determined location of the mobile station (1) from the database; and
**characterized by**
transmitting said retrieved area related information automatically to the mobile station (1) of the mobile user, without any additional request from the mobile station (1), every time the mobile station (1) moves from one location defined by at least one base station (4) or cell to another location defined by at least one another base station (4) or cell, or when the mobile station (1) is switched on, or when the area related information is updated.

2. A method according to claim 1, **characterized in that**:
the area related information is in the form of Hypertext Markup Language, HTML, documents stored in a World Wide Web, WWW, server database, said information being accessible through Internet (14);
the access from the mobile communications network to the Internet (14) occurs in a form of packet switched data communication and is provided by means of an Internet Access Server (12);
the identified location information is processed in the Internet Access Server (12) such that desired information can be retrieved from the WWW server database as a response to the processing; and
the information retrieved to the Internet Access Server (12) from the WWW server database is transmitted further to the mobile station (1) without any specific request by the mobile station (1) when the mobile station (1) is otherwise not currently involved in a transmission having a higher priority.

3. A method according to claim 1 or 2, **characterized in that** the location of the mobile station (1) is identified by a Mobile Switching Center (10) of the mobile communications network.

4. A method according to claim 1 or 2, **characterized in that** the location of the mobile station (1) is identified by a Mobile Positioning Center (11) connected to the mobile communications network.

5. A method according to any of claims 2 to 4, **characterized by**:
receiving a URL address of the desired area related information from a mapping table of the Internet Access Server (12);
retrieving the area related information from a source defined by the URL address to the Internet Access Server (12); and
subsequently transmitting the area related information to the mobile station (1).

6. A method according to any of claims 2 to 4, **characterized in that** the area related information to be transmitted to the mobile station (1) is stored in the memory of the Internet Access Server (12).

7. A method according to any of the preceding claims, **characterized by** the method further comprising checking the profile of the mobile user so as to determine the need and kind of the area related information to be transmitted to the mobile station (1) of that mobile user.

8. A method according to any of the preceding claims, **characterized in that** the step of defining the location of the mobile station (1) further includes a step of using delays in the signals transmitted between the mobile station (1) and the base station (4) and/or the signal strength between the mobile station (1) and the base station (4) and/or history of handovers between base station (4) or cells so as to provide a more accurate definition of the location than an accuracy of the coverage area of one base station (4) or cell.

9. A method according to any of the preceding claims, **characterized in that** for transmitting the area related information to the mobile station (1), the mobile station (1) has a mobile transceiver (1) and a data processing device (2) having an operational connection therebetween.

10. An arrangement in a Public Land Mobile Network PLMN, comprising a Mobile Switching Center (10) and base stations (4) connected to the Mobile Switching Center (10) for communication through an air interface with a mobile station (1) of a mobile user, the arrangement being adapted for enabling the mobile user to access information provided through a communications network, the arrangement comprising:
means for providing an access from the Mobile Switching Center (10) to the communications network;
means for determining the location of the mobile station (1) on basis of reports received from at least one of the base stations (4);
means for processing the location information so as to retrieve location area related information from a database containing said area related information; and
**characterized in that** the arrangement further comprises:
means for automatically transmitting said retrieved location area related information to the mobile station (1) of the mobile user, without any additional request from the mobile station (1), every time the mobile station (1) moves from one location defined by at least one base station (4) or cell to another location defined by at least one another base station (4) or cell, or when the mobile station (1) is switched on, or when the area related information is updated.

11. An arrangement according to claim 10, **characterized in that**:
the area related information is in form of HyperText Markup Language, HTML, documents stored in a World Wide Web, WWW, server database;
the communications network through which said information is accessible is Internet (14);
the access from the Public Land Mobile Network to the Internet (14) is provided by means of an Internet Access Server (12) and is arranged to occur in a form of data communication via a packet switched connection, and
wherein said Internet Access Server (12) is further arranged to process the identified location information such that the desired location area related information can be retrieved from the WWW server database as a response for the processing, and to subsequently transmit the retrieved information to the mobile station (1) when there is a free communications channel available between the mobile station (1) and the Public Land Mobile Network.

12. An arrangement according to claim 10 or 11, **characterized in that** the Mobile Switching Center (10) of the mobile network forms the means for determining the location of the mobile station (1).

13. An arrangement according to claim 10 or 11, **characterized in that** the means for determining the location of the mobile station (1) comprises a Mobile Positioning Center (11) connected to the mobile network.

14. An arrangement according to any of claims 11 to 13, **characterized in that** the Internet Access Server (12) contains at least one table into which the locations based on the base station information and URL addresses of the corresponding area related information are mapped.

15. An arrangement according to any of claims 10 to 14, **characterized in that** at least one of the locations consists of a group of at least two base stations (4).

16. An arrangement according to any of claims 10 to 15, **characterized in that** the mobile station (1) comprises a mobile radio transceiver (1) and a data processing device (2) and an operational connection therebetween.

## Patentansprüche

1. Verfahren zum Bereitstellen von einer Datenbank wiederauffindbaren Informationen für einen Mobiltelefonbenutzer, wobei das Verfahren die folgenden Schritte umfasst:
Herstellen einer Kommunikationsverbindung zwischen einer Mobilstation (1) des Mobiltelefonbenutzers und einer Basisstation (4) oder Basisstationen eines Mobilkommunikationsnetzes;
Bestimmen des Standorts der Mobilstation (1) unter Verwendung von einer Basisstation (4) oder von Basisstationen des Mobilkommunikationsnetzes;
Verarbeiten der identifizierten Standortinformationen im Mobilkommunikationsnetz zum Wiederauffinden von gebietsbezogenen Informationen, die sich auf den bestimmten Standort der Mobilstation (1) beziehen, von der Datenbank; und
**gekennzeichnet durch**
automatisches Übermitteln der wiederaufgefundenen gebietsbezogenen Informationen an die Mobilstation (1) des Mobiltelefonbenutzers ohne zusätzliche Anfrage von der Mobilstation (1), immer, wenn die Mobilstation (1) sich von einem **durch** mindestens eine Basisstation (4) oder Zelle definierten Standort zu einem anderen **durch** mindestens eine andere Basisstation (4) oder Zelle definierten Standort bewegt, oder, wenn die Mobilstation (1) eingeschaltet wird, oder, wenn die gebietsbezogenen Informationen aktualisiert werden.

2. Verfahren nach Anspruch 1, **dadurch gekennzeichnet, dass**:
die gebietsbezogenen Informationen die Form von Hypertext Markup Language, HTML, Dokumenten haben, die in einer World Wide Web, WWW, Serverdatenbank gespeichert sind, wobei über Internet (14) auf die Informationen zugegriffen werden kann;
der Zugriff vom Mobilkommunikationsnetz auf das Internet (14) in einer Form von paketvermittelter Datenkommunikation erfolgt und mittels eines InternetZugriffsservers (12) bereitgestellt wird;
die identifizierten Standortinformationen im Internetzugriffsserver (12) verarbeitet werden, derart, dass die erwünschten Informationen als Reaktion auf die Verarbeitung von der WWW-Serverdatenbank wiederaufgefunden werden können; und
die Informationen, die von der WWW-Serverdatenbank zum Internetzugriffsserver (12) wiederaufgefunden werden, ferner ohne spezifische Anfrage durch die Mobilstation (1) an die Mobilstation (1) übermittelt werden, wenn die Mobilstation (1) gegenwärtig nicht anderweitig an einer Übermittlung beteiligt ist, die eine höhere Priorität hat.

3. Verfahren nach Anspruch 1 oder 2, **dadurch gekennzeichnet, dass** der Standort der Mobilstation (1) durch eine Mobilvermittlungsstelle (10) des Mobilkommunikationsnetzes identifiziert wird.

4. Verfahren nach Anspruch 1 oder 2, **dadurch gekennzeichnet, dass** der Standort der Mobilstation (1) durch ein Mobile Positioning Center (11), das mit dem Mobilkommunikationsnetz verbunden ist, identifiziert wird.

5. Verfahren nach einem der Ansprüche 2 bis 4, **gekennzeichnet durch**:
Empfangen einer URL-Adresse der gewünschten gebietsbezogenen Informationen von einer Mapping-Tabelle des Internetzugriffsservers (12);
Wiederauffinden der gebietsbezogenen Informationen von einer **durch** die URL-Adresse definierten Quelle zum Internetzugriffsserver (12); und
anschließendes Übermitteln der gebietsbezogenen Informationen an die Mobilstation (1).

6. Verfahren nach einem der Ansprüche 2 bis 4, **dadurch gekennzeichnet, dass** die an die Mobilstation (1) zu übermittelnden gebietsbezogenen Informationen im Speicher des Internetzugriffsservers (12) gespeichert sind.

7. Verfahren nach einem der vorhergehenden Ansprüche, **dadurch gekennzeichnet, dass** das Verfahren ferner das Überprüfen des Profils des Mobiltelefonbenutzers umfasst, um den Bedarf und die Art der an die Mobilstation (1) dieses Mobiltelefonbenutzers zu übermittelnden gebietsbezogenen Informationen zu bestimmen.

8. Verfahren nach einem der vorhergehenden Ansprüche, **dadurch gekennzeichnet, dass** der Schritt des Definierens des Standorts der Mobilstation (1) ferner einen Schritt des Verwendens von Verzögerungen in den zwischen der Mobilstation (1) und der Basisstation (4) übermittelten Signalen und/oder der Signalstärke zwischen der Mobilstation (1) und der Basisstation (4) und/oder des Verlaufs der Handover zwischen Basisstation (4) oder Zellen umfasst, um eine genauere Definition des Standorts als eine Genauigkeit des Abdeckungsgebiets von einer Basisstation (4) oder Zelle bereitzustellen.

9. Verfahren nach einem der vorhergehenden Ansprüche, **dadurch gekennzeichnet, dass** die Mobilstation (1) zum Übertragen der gebietsbezogenen Informationen an die Mobilstation (1) eine mobile Sende-/Empfangseinrichtung (1) und eine Datenverarbeitungseinrichtung (2) hat, die eine betriebsbereite Verbindung dazwischen hat.

10. Vorrichtung in einem öffentlichen Mobilfunknetz, PLMN - Public Land Mobile Network, das eine Mobilvermittlungsstelle (10) und Basisstationen (4), die zur Kommunikation über eine Luftschnittstelle mit einer Mobilstation (1) eines Mobiltelefonbenutzers mit der Mobilvermittlungsstelle (10) verbundenen sind, umfasst, wobei die Vorrichtung angepasst ist, um den Mobiltelefonbenutzer zu befähigen, auf Informationen zuzugreifen, die durch ein Kommunikationsnetz bereitgestellt werden, wobei die Vorrichtung Folgendes umfasst:
Mittel zum Bereitstellen eines Zugriffs von der Mobilvermittlungsstelle (10) zum Kommunikationsnetz;
Mittel zum Bestimmen des Standorts der Mobilstation (1) basierend auf Berichten, die von mindestens einer der Basisstationen (4) empfangen werden;
Mittel zum Verarbeiten der Standortinformationen, um standortgebietsbezogene Informationen von einer Datenbank wiederaufzufinden, die die gebietsbezogenen Informationen enthält; und
**dadurch gekennzeichnet, dass** die Vorrichtung ferner Folgendes umfasst:
Mittel zum automatischen Übermitteln der wiederaufgefundenen standortgebietsbezogenen Informationen an die Mobilstation (1) des Mobiltelefonbenutzers ohne zusätzliche Anfrage von der Mobilstation (1), immer, wenn die Mobilstation (1) sich von einem durch mindestens eine Basisstation (4) oder Zelle definierten Standort zu einem anderen durch mindestens eine andere Basisstation (4) oder Zelle definierten Standort bewegt, oder, wenn die Mobilstation (1) eingeschaltet wird, oder, wenn die gebietsbezogenen Informationen aktualisiert werden.

11. Vorrichtung nach Anspruch 10, **dadurch gekennzeichnet, dass**:
die gebietsbezogenen Informationen die Form von Hypertext Markup Language, HTML, Dokumenten haben, die in einer World Wide Web, WWW, Serverdatenbank gespeichert sind;
das Kommunikationsnetz, durch das auf die Informationen zugegriffen werden kann, das Internet (14) ist;
der Zugriff vom öffentlichen Mobilfunknetz auf das Internet (14) mittels eines Internetzugriffsservers (12) bereitgestellt wird und eingerichtet ist, um in einer Form von Datenkommunikation über eine paketvermittelte Verbindung zu erfolgen, und
wobei der Internetzugriffsserver (12) ferner eingerichtet ist, um die identifizierten Standortinformationen derart zu verarbeiten, dass die gewünschten standortgebietsbezogenen Informationen von der WWW-Serverdatenbank als Reaktion für die Verarbeitung wiederaufgefunden werden können, und, um die wiederaufgefundenen Informationen anschließend an die Mobilstation (1) zu übermitteln, wenn zwischen der Mobilstation (1) und dem öffentlichen Mobilfunknetz ein freier Kommunikationskanal verfügbar ist.

12. Vorrichtung nach Anspruch 10 oder 11, **dadurch gekennzeichnet, dass** die Mobilvermittlungsstelle (10) des Mobilnetzes das Mittel zum Bestimmen des Standorts der Mobilstation (1) bildet.

13. Vorrichtung nach Anspruch 10 oder 11, **dadurch gekennzeichnet, dass** die Mittel zum Bestimmen des Standorts der Mobilstation (1) ein Mobile Positioning Center (11) umfassen, das mit dem Mobilnetz verbunden ist.

14. Vorrichtung nach einem der Ansprüche 11 bis 13, **dadurch gekennzeichnet, dass** der Internetzugriffsserver (12) mindestens eine Tabelle enthält, in die die Standorte basierend auf den Basisstationsinformationen und URL-Adressen der entsprechenden gebietsbezogenen Informationen gemappt sind.

15. Vorrichtung nach einem der Ansprüche 10 bis 14, **dadurch gekennzeichnet, dass** mindestens einer der Standorte aus einer Gruppe von mindestens zwei Basisstationen (4) besteht.

16. Vorrichtung nach einem der Ansprüche 10 bis 15, **dadurch gekennzeichnet, dass** die Mobilstation (1) eine mobile Funk-Sende-/Empfangseinrichtung (1) und eine Datenverarbeitungseinrichtung (2) und eine betriebsfähige Verbindung dazwischen umfasst.

## Revendications

1. Procédé destiné à fournir à un utilisateur mobile des informations pouvant être récupérées dans une base de données, ledit procédé comprenant les étapes consistant à :
établir une connexion de communication entre une station mobile (1) de l'utilisateur mobile et une station de base (4) ou des stations de base d'un réseau de communication mobile ;
déterminer la position de la station mobile (1) en utilisant une station de base (4) ou des stations de base du réseau de communication mobile ;
traiter les informations de position identifiées dans le réseau de communication mobile afin de récupérer dans la base de données des informations liées à la région, relatives à la position déterminée de la station mobile (1) ; et
**caractérisé par** le fait de
transmettre automatiquement à la station mobile (1) lesdites informations liées à la région qui ont été récupérées, sans aucune demande supplémentaire de la station mobile (1), à chaque fois que la station mobile (1) se déplace entre une position définie par au moins une station de base (4) ou cellule et une autre position définie par au moins une autre station de base (4) ou cellule, ou bien lorsque la station mobile (1) est mise sous tension, ou bien lorsque les informations liées à la région sont mises à jour.

2. Procédé selon la revendication 1, **caractérisé en ce que** :
les informations liées à la région se présentent sous la forme de documents en langage de balisage hypertextuel, HTML (pour « *Hypertext Markup Language* »), stockés sur un serveur du réseau mondial, WWW (pour « *World Wide Web* »), lesdites informations étant accessibles via l'Internet (14) ;
l'accès du réseau de communication mobile à l'Internet (14) se produit sous la forme d'une communication de données commutées par paquets et il est fourni par un Serveur d'Accès à l'Internet (12) ;
les informations de position identifiées sont traitées par le Serveur d'Accès à l'Internet (12) de telle manière que des informations voulues puissent être récupérées dans la base de données du serveur WWW sous la forme d'une réponse au traitement ; et
les informations renvoyées au Serveur d'Accès à l'Internet (12) par la base de données du serveur WWW sont retransmises à la station mobile (1) sans aucune demande spécifique de la station mobile (1) lorsque la station mobile (1) n'est pas par ailleurs actuellement engagée dans une transmission présentant une priorité supérieure.

3. Procédé selon la revendication 1 ou 2, **caractérisé en ce que** la position de la station mobile (1) est identifiée par un Centre de Commutation Mobile (10) du réseau de communication mobile.

4. Procédé selon la revendication 1 ou 2, **caractérisé en ce que** la position de la station mobile (1) est identifiée par un Centre de Localisation de Mobiles (11) connecté au réseau de communication mobile.

5. Procédé selon l'une quelconque des revendications 2 à 4, **caractérisé par** le fait de :
recevoir une adresse URL des informations liées à la région qui sont souhaitées d'une table de mappage du Serveur d'Accès à l'Internet (12) ;
obtenir les informations liées à la région de la source définie par l'adresse URL auprès du Serveur d'Accès à l'Internet (12) ; et
transmettre ensuite les informations liées à la région à la station mobile (1).

6. Procédé selon l'une quelconque des revendications 2 à 4, **caractérisé en ce que** les informations liées à la région qui doivent être transmises à la station mobile (1) sont stockées dans la mémoire du Serveur d'Accès à l'Internet (12).

7. Procédé selon l'une quelconque des revendications précédentes, **caractérisé par le fait que** le procédé comprend en outre l'étape consistant à vérifier le profil de l'utilisateur mobile afin de déterminer le besoin et la nature des informations liées à la région qui doivent être transmises à la station mobile (1) de cet utilisateur mobile.

8. Procédé selon l'une quelconque des revendications précédentes, **caractérisé en ce que** l'étape de définition de la position de la station mobile (1) comprend en outre une étape consistant à utiliser les retards des signaux transmis entre la station mobile (1) et la station de base (4) et/ou l'intensité du signal entre la station mobile (1) et la station de base (4) et/ou l'historique des transferts entre la station de base (4) ou les cellules, afin de fournir une définition plus précise de la position que celle de la région de couverture d'une station de base (4) ou cellule.

9. Procédé selon l'une quelconque des revendications précédentes, **caractérisé en ce que**, pour transmettre les informations liées à la région à la station mobile (1), la station mobile (1) possède un émetteur-récepteur mobile (1) et un dispositif de traitement de données (2) possédant une connexion opérationnelle entre eux.

10. Agencement dans un Réseau Mobile Terrestre Public PLMN (pour « *Public Land Mobile Network* »), comprenant un Centre de Commutation Mobile (10) et des stations de base (4) connectées au Centre de Commutation Mobile (10) afin de communiquer par une interface radio avec une station mobile (1) d'un utilisateur mobile, l'agencement étant conçu pour permettre à l'utilisateur mobile d'accéder à des informations fournies par un réseau de communication, l'agencement comprenant :
un moyen destiné à fournir un accès entre le Centre de Commutation Mobile (10) et le réseau de communication ;
un moyen destiné à déterminer la position de la station mobile (1) sur la base de rapports reçus d'au moins une des stations de base (4) ;
un moyen destiné à traiter les informations de position afin de retrouver des informations liées à la région dans une base de données contenant lesdites informations liées à la région ; et
**caractérisé en ce que** l'agencement comprend en outre :
un moyen destiné à transmettre automatiquement à la station mobile (1) de l'utilisateur mobile lesdites informations récupérées liées à la région de localisation, sans aucune demande supplémentaire de la station mobile (1), à chaque fois que la station mobile (1) se déplace entre une position définie par au moins une station de base (4) ou cellule et une autre position définie par au moins une autre station de base (4) ou cellule, ou bien lorsque la station mobile (1) est mise sous tension, ou bien lorsque les informations liées à la région sont mises à jour.

11. Agencement selon la revendication 10, **caractérisé en ce que** :
les informations liées à la région se présentent sous la forme de documents en langage de balisage hypertexte, HTML (pour « *Hypertext Markup Language* »), stockés sur un serveur du réseau mondial, WWW (pour « *World Wide Web* ») ;
le réseau de communication grâce auquel lesdites informations sont accessibles est l'Internet (14) ;
l'accès du Réseau de Communication Mobile à l'Internet (14) est fourni par un Serveur d'Accès à l'Internet (12) et est conçu pour se produire sous la forme d'une communication de données via une connexion commutée par paquets, et
dans lequel ledit Serveur d'Accès à l'Internet (12) est également conçu pour traiter les informations de position identifiées de telle manière que les informations souhaitées liées à la région de localisation puissent être récupérées dans la base de données du serveur WWW sous la forme d'une réponse au traitement et à transmettre ensuite les informations récupérées à la station mobile (1) lorsqu'il existe un canal de communication libre qui est disponible entre la station mobile (1) et le Réseau Mobile Terrestre Public.

12. Agencement selon la revendication 10 ou 11, **caractérisé en ce que** le Centre de Commutation Mobile (10) du réseau mobile constitue le moyen destiné à déterminer la position de la station mobile (1).

13. Agencement selon la revendication 10 ou 11, **caractérisé en ce que** le moyen destiné à déterminer la position de la station mobile (1) comprend un Centre de Localisation de Mobiles (11) connecté au réseau mobile.

14. Agencement selon l'une quelconque des revendications 11 à 13, **caractérisé en ce que** le Serveur d'Accès à l'Internet (12) contient au moins une table dans laquelle se correspondent les positions fondées sur les informations des stations de base et des adresses URL des informations liées à la région qui leur correspondent.

15. Agencement selon l'une quelconque des revendications 10 à 14, **caractérisé en ce qu'**au moins l'une des positions est constituée d'un groupe d'au moins deux stations de base (4).

16. Agencement selon l'une quelconque des revendications 10 à 15, **caractérisé en ce que** la station mobile (1) comprend un émetteur-récepteur radio mobile (1) et un dispositif de traitement de données (2), et une connexion opérationnelle entre eux.
